# EUROPEAN PATENT APPLICATION

(11) **EP 4 375 330 A1**
(43) Date of publication of application: **29.05.2024**
(21) Application number: 23840866.0
(22) Date of filing: 28.06.2023
(51) Int. Cl.: C08L 67/02, C08L 25/10, C08L 51/04, C08L 23/08, C08L 63/00, C08K 7/14, C03C 3/087

(54) **THERMOPLASTIC RESIN COMPOSITION AND AUTOMOBILE INTERIOR PART MANUFACTURED THEREFROM**

(30) Priority: 29.09.2022 KR 20220124048; 27.06.2023 KR 20230082468
(71) Applicant: LG Chem, Ltd., Seoul 07336 (KR)
(72) Inventor: KONG, Seonho, Daejeon 34122 (KR); KO, Gun, Daejeon 34122 (KR); SON, Sun Mo, Daejeon 34122 (KR); LEE, Hyun Seok, Daejeon 34122 (KR)
(74) Representative: Goddar, Heinz J.
(86) International application number: PCT/KR2023/008981
(87) International publication number: WO 2024/071585

(57) **Abstract**

Disclosed are a thermoplastic resin composition and an automotive interior part manufactured using the same. More particularly, the thermoplastic resin composition according to the present disclosure includes different materials from existing thermoplastic resin compositions, thereby improving heat resistance and impact resistance, satisfying the physical property balance between mechanical properties and fluidity and providing excellent product reliability and appearance quality.

## Description

### [Technical Field]

### [Cross-Reference to Related Applications]

This application claims priority to Korean Patent Application No. 10-2022-0124048, filed on September 29, 2022, and Korean Patent Application No. 10-2023-0082468, refiled on June 27, 2023, based on Korean Patent Application No. 10-2022-0124048, in the Korean Intellectual Property Office, the disclosure of which is incorporated herein by reference.

The present disclosure relates to a thermoplastic resin composition and an automotive interior part manufactured using the same, and more particularly to a thermoplastic resin composition exhibiting improved heat resistance and impact resistance due to a change in raw materials used and, accordingly, satisfying the physical property balance between mechanical properties and fluidity and being capable of providing excellent product reliability and appearance quality and an automotive interior part manufactured using the thermoplastic resin composition.

### [Background Art]

As examples of existing materials used for manufacturing automotive interior parts, there are a composite resin prepared by mixing an acrylonitrile-butadiene-styrene resin (ABS), a polycarbonate resin (PC) and an acrylonitrile-butadiene-styrene resin (ABS), a composite resin prepared by mixing a polycarbonate resin (PC) and acrylate-styrene-acrylonitrile (ASA), a composite resin prepared by mixing a polycarbonate resin (PC) and a polybutylene terephthalate resin (PBT), and the like. These composite resins have excellent physical properties, thus being used for manufacturing various automotive interior parts.

Recently, processing and using product waste made of a polyethylene terephthalate resin (hereinafter referred to as "PET resin") for various plastic products has been reviewed due to environmental concerns.

In particular, taking PET bottles as an example, the quantity is increasing to 2.5 billion and 100,000 tons, but the recycling method for them is only to recover them and recycle them as beverage bottles or as fibers or packaging materials.

The PET resin is classified into a polyester resin group like PBT, but it is known that the PET resin has poor moldability due to a crystallization temperature higher than that of PBT, and has relatively unstable mechanical properties, e.g., dimensional change.

Accordingly, when PET resin is added, its physical properties described above are inevitably poor compared to PBT. Therefore, there is a need for a technology for addressing this problem.

### [Related Art Document]

### ] [Patent Document]

KR 2016-0060907 A (published on May 31, 2016)

### [Disclosure]

### [Technical Problem]

Therefore, the present disclosure has been made in view of the above problems, and it is one object of the present disclosure to provide a thermoplastic resin composition including materials different from those of existing thermoplastic resin compositions, thereby being capable of reducing production cost, providing excellent economic feasibility due to applicability to unpainted products, improving heat resistance and impact resistance, satisfying the physical property balance between mechanical properties and fluidity, and providing excellent product reliability and appearance quality.

It is another object of the present disclosure to provide an automotive interior part manufactured using a thermoplastic resin composition.

The above and other objects can be accomplished by the present disclosure described below.

### [Technical Solution]

In accordance with an aspect of the present disclosure, the above and other objects can be accomplished by the provision of a thermoplastic resin composition, including: i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber including SiO₂, CaO and Al₂O₃, wherein a content of SiO₂ is 50 % by weight or more, and a content of Al₂O₃ is greater than a content of CaO.

II) In I), i) the polybutylene terephthalate resin may have an intrinsic viscosity of 0.45 to 0.85 dl/g.

III) In I) or II), ii) the polyethylene terephthalate resin may have an intrinsic viscosity of 0.5 to 0.9 dl/g.

IV) In I) to III), ii) the polyethylene terephthalate resin may be a recycled polyethylene terephthalate resin.

V) In I) to IV), iii) the (meth)acrylate compound-conjugated diene compound-aromatic vinyl compound copolymer may include a graft copolymer including 40 to 80 % by weight of a conjugated diene compound, 10 to 40 % by weight of an aromatic vinyl compound and 1 to 20 % by weight of a (meth)acrylate compound.

VI) In I) to V), iii) the (meth)acrylate compound-conjugated diene compound-aromatic vinyl compound copolymer may have a particle size of 0.2 to 0.4 *µ*m.

VII) In I) to VI), iv) the carboxy reactive epoxy resin may be one or more selected from among an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer and an ethylene-vinyl acetate-glycidyl methacrylate copolymer.

VIII) In I) to VII), iv) the carboxy reactive epoxy resin may include 1 to 15 % by weight of a monomer derived from glycidyl methacrylate.

IX) In I) to VIII), i) an intrinsic viscosity of i) the polybutylene terephthalate resin is smaller than an intrinsic viscosity of ii) the polyethylene terephthalate resin.

X) In I) to IX), ii) the polyethylene terephthalate resin may include a water bottle-recycled resin.

XI) In I) to X), the water bottle-recycled resin may be molded into pellets by extruding waste water bottles.

XII) In I) to XI), ii) the polyethylene terephthalate resin may have a melting point of 250 to 256 °C.

XIII) In I) to XII), the thermoplastic resin composition may include one or more additives (vi) selected from among a polyethylene-based lubricant, a hydrolysis-inhibiting auxiliary and a phenolic antioxidant.

XIV) In I) to XIII), the thermoplastic resin composition may have a flexural strength of 140 MPa or more and a flexural modulus of 5000 MPa or more, wherein the flexural strength and the flexural modulus are measured at a rate of 2 mm/min using a 4 mm specimen and SPAN 64 according to ISO 178.

XV) In accordance with another aspect of the present disclosure, there is provided a thermoplastic resin composition, including: i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber including SiO₂, CaO and Al₂O₃, wherein a content of SiO₂ is 50 % by weight or more, a content of Al₂O₃ is greater than a content of CaO, and an intrinsic viscosity of i) the polybutylene terephthalate resin is smaller than an intrinsic viscosity of ii) the polyethylene terephthalate resin.

XVI) In accordance with another aspect of the present disclosure, there is provided a method of preparing a thermoplastic resin composition, the method including: feeding the thermoplastic resin composition into an extruder and melt-kneading and extruding the thermoplastic resin composition, wherein the thermoplastic resin composition includes:
i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber including SiO₂, CaO and Al₂O₃, wherein a content of SiO₂ is 50 % by weight or more, and a content of Al₂O₃ is greater than a content of CaO.

XVII) In XVI), the melt-kneading and extruding of the thermoplastic resin composition may be performed at an extrusion temperature of 250 to 300°C, a flow ratio (F/R) of 10 to 55 kg/hr, and a screw rotation rate of 150 to 600 rpm.

XVIII) In XVI) to XVII), the method may include injection-molding at an injection-molding temperature of 240 to 280°C and a mold temperature of 40 to 80°C after extruding the thermoplastic resin composition.

XIX) In accordance with still another aspect of the present disclosure, there is provided a method of preparing a thermoplastic resin composition, the method including: feeding the thermoplastic resin composition into an extruder and melt-kneading and extruding the thermoplastic resin composition, wherein the thermoplastic resin composition includes:
i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber including SiO₂, CaO and Al₂O₃, wherein a content of SiO₂ is 50 % by weight or more, and a content of Al₂O₃ is greater than a content of CaO, wherein XX) in XIX), an intrinsic viscosity of i) the polybutylene terephthalate resin is smaller than an intrinsic viscosity of ii) the polyethylene terephthalate resin.

XX) In accordance with yet another aspect of the present disclosure, there is provided an automotive interior part manufactured using the thermoplastic resin composition.

XXI) In XX), the automotive interior part may be a vehicle electronics body control module housing.

### [Advantageous Effects]

As apparent from the above description, a thermoplastic resin composition according to the present disclosure can be molded into an automotive interior part.

In addition, an automotive interior part manufactured from the thermoplastic resin composition according to the present disclosure has improved heat resistance and impact resistance, thereby being capable of satisfying the physical property balance between mechanical properties and fluidity and having excellent moldability and improved appearance quality.

Therefore, the thermoplastic resin composition according to the present disclosure is an automotive interior material and can be applied to the automotive interior part field including a vehicle electronics body control module housing.

### [Description of Drawings]

FIG. 1 is a process flowchart illustrating a process of manufacturing a recycled polyethylene terephthalate resin used in Examples to be described below.
FIG. 2 is a photograph illustrating a virgin PET resin (left drawing) and a waste water bottle-recycled resin (right drawing) obtained according to the process of FIG. 1, respectively. Here, refers to a virgin resin made by the DMT method. The DMT method refers to the transesterification reaction of dimethyl terephthalate (DMT) and ethylene glycol (EG) known in the art.

### [Best Mode]

Hereinafter, the present disclosure is described in more detail to help understand the present disclosure.

The terms and words which are used in the present specification and the appended claims should not be construed as being confined to common meanings or dictionary meanings but should be construed as having meanings and concepts matching the technical spirit of the present disclosure in order to describe the present disclosure in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this disclosure, such ranges are contiguous and include all values from the minimum value to the maximum value of such ranges unless otherwise indicated. Also, when such ranges refer to integers, all integers inclusive from the minimum value to the maximum value are included unless otherwise specified.

In the present disclosure, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all reasonable integers within the scope of a range, such as 10.5 %, 15.5 %, 25.5 %.

The term "hydrolysis stabilizer" used in this specification refers to a material that is stable against hydrolysis and can improve mechanical properties, etc. even under conditions where hydrolysis can occur, unless otherwise specified.

In this specification, a melt flow rate may be a melt flow rate measured under a load of 5 kg at 260 °C in accordance with ISO 1133, unless otherwise specified.

The present inventors confirmed that an interior part for automobiles manufactured using a thermoplastic resin composition including a polybutylene terephthalate resin, a polyethylene terephthalate resin, a hydrolysis stabilizer containing a (meth)acrylate compound-conjugated diene compound-aromatic vinyl compound copolymer and a carboxy reactive epoxy resin, and glass fiber containing an excess of SiO₂ in a specific weight percent ratio exhibits improved heat resistance and impact resistance, thus satisfying the physical property balance between mechanical properties and fluidity and being capable of providing excellent product reliability and appearance quality. As a result, the present inventors completed an automotive interior part material that is an unpainted product with excellent moldability and appearance quality while satisfying the physical property balance between mechanical properties and fluidity.

### Thermoplastic resin composition

A thermoplastic resin composition according to an embodiment of the present disclosure includes i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber containing SiO₂, CaO and Al₂O₃, wherein a content of SiO₂ is 50 % by weight and a content of Al₂O₃ is greater than a content of CaO.

i) The polybutylene terephthalate resin and ii) the polyethylene terephthalate resin according to an embodiment of the present disclosure are crystalline materials. These resins impart moldability to a thermoplastic resin composition when included in the thermoplastic resin composition, and impart chemical resistance to an automotive interior part manufactured using the thermoplastic resin composition.

### i) Polybutylene terephthalate resin

i) The polybutylene terephthalate resin, which is a crystalline resin, prevents penetration of chemicals from the outside and improves the flowability of a thermoplastic resin composition during injection molding due to a crystallized structure, resulting in excellent appearance quality.

In an example of the present disclosure, a polybutylene terephthalate resin obtained by condensation polymerization through direct esterification or transesterification of 1,4-butanediol and terephthalic acid or dimethyl terephthalate may be used as the polybutylene terephthalate resin i).
i) The polybutylene terephthalate resin (PBT) may have a repeating unit represented by Formula 1 below:

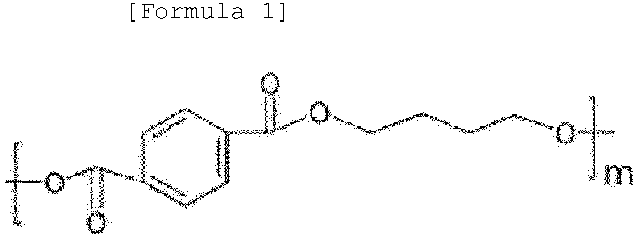

In the formula, m is an average polymerization degree of 50 to 200.

In an example of the present disclosure, a copolymer obtained by copolymerizing the polybutylene terephthalate resin with an impact-improving compound such as polytetramethylene glycol, polyethylene glycol, polypropylene glycol, aliphatic polyester or aliphatic polyamide, or a modified polybutylene terephthalate resin obtained by mixing the polybutylene terephthalate resin with the impact-improving compound may be used to increase the impact strength of the thermoplastic resin composition.

In an example of the present disclosure, an intrinsic viscosity of the polybutylene terephthalate resin measured according to ASTM D2857 may be, for example, 0.45 to 0.85 dl/g, 0.45 to 0.77 dl/g, or 0.55 to 0.75 dl/g. When the intrinsic viscosity is too low outside the range, the effect of reinforcing physical properties is reduced, so the chemical resistance improvement effect is insignificant. When the intrinsic viscosity is too high, moldability is reduced, which can cause problems in the appearance of parts.

Unless otherwise specified, an intrinsic viscosity in this specification is a value, measured at 20 °C using an Ubbelohde viscometer, of a filtrate filtered using a filter after completely dissolving a sample to be measured in a methylene chloride solvent at a concentration of 0.05 g/ml.

i) The polybutylene terephthalate resin may have a weight average molecular weight of, for example, 10,000 to 80,000 g/mol, 20,000 g/mol to 100,000 g/mol, 30,000 g/mol to 90,000 g/mol, 40,000 g/mol to 80,000 g/mol, or 50,000 g/mol to 70,000 g/mol. Within these ranges, mechanical properties may be improved.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 pm), the filtered samples are injected into a GPC injector. Then, the molecular weight and molecular weight distribution of the compound may be obtained by comparing the elution time of the sample with the calibration curve of the standard sample. At this time, Infinity II 1260 (Agilient Co.) may be used as a measuring instrument, and a flow rate may be set to 1.00 mL/min and a column temperature may be set to 40.0 °C.

i) The polybutylene terephthalate resin may be included in a content of, for example, 44 to 56 % by weight, particularly 45 to 52 % by weight, preferably 46 to 52 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive, constituting the composition). When the content is less than the ranges, there is a disadvantage in that cracks occur in an automotive interior part manufactured using the thermoplastic resin composition including the components. When the content is greater than the ranges, an automotive interior part manufactured using the thermoplastic resin composition including the components exhibits reduced rigidity and heat resistance.

i) The polybutylene terephthalate resin may have an intrinsic viscosity greater than that of ii) the polyethylene terephthalate resin.

Polymerization methods commonly practiced in the art to which the present disclosure pertains may be used to prepare the polybutylene terephthalate resin. In addition, commercially available polybutylene terephthalate resins may be used when the polybutylene terephthalate resins conform to the definition of the polybutylene terephthalate resin according to the present disclosure.

### ii) a polyethylene terephthalate resin

According to an example of the present disclosure, physical properties required for BCM parts may be implemented when ii) the polyethylene terephthalate resin is included.

ii) The polyethylene terephthalate resin may be a general polyethylene terephthalate resin without specific limitation.

ii) The polyethylene terephthalate resin may have a repeating unit represented by Formula 2 below as a basic structure:

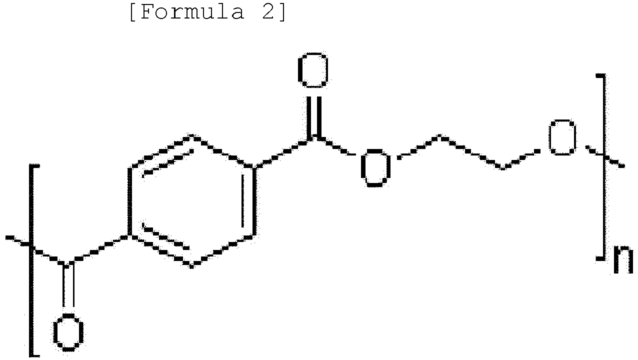

In the formula, n represents an integer greater than or equal to 1 and, for example, an integer of 40 to 160.

In an example of the present disclosure, ii) the polyethylene terephthalate resin may be a (co)polymer copolymerized or modified with an impact-improving compound or a copolymer including an impact-improving compound or an eco-friendly compound, thereby being capable of increasing the impact strength of the thermoplastic resin composition.

The impact-improving compound may be, for example, polytetramethylene glycol, polyethylene glycol, polypropylene glycol, aliphatic polyester, aliphatic polyamide, or the like.

The eco-friendly compound may be, for example, 1,4-cyclohexanedimethanol or isophthalic acid.

In an example of the present disclosure, an intrinsic viscosity of ii) the polyethylene terephthalate resin measured according to ASTM D2857 may be 0.5 dl/g or more, 0.5 to 0.9 dl/g or 0.6 to 0.9 dl/g. When the intrinsic viscosity is too low outside the range, the effect of reinforcing physical properties may be reduced, so the effect of improving chemical resistance may be insignificant. When the intrinsic viscosity is too high, moldability may be decreased, which may cause problems in the appearance of parts.

ii) The polyethylene terephthalate resin may have a weight average molecular weight of, for example, 5,000 to 80,000 g/mol, or 10,000 to 60,000 g/mol. When these ranges are satisfied, hydrolysis resistance and injection deviation may be improved.

ii) The polyethylene terephthalate resin may have a melting point of 250 °C or more, specifically a melting point of 250 to 256 °C. Within these ranges, the melt flow rate of the thermoplastic resin composition may be improved so that moldability may be improved.

ii) The polyethylene terephthalate resin may have a crystallization temperature (Tm) of 250 °C or more, specifically a crystallization temperature (Tm) of 250 to 258 °C. Within these ranges, the melt flow rate of the thermoplastic resin composition may be improved so that moldability may be improved.

In this specification, a melting point may be measured using a method known in the art, and a heat absorption peak may be measured using, for example, a differential scanning calorimeter (DSC).

ii) The polyethylene terephthalate resin may be included in a content of 8 to 17 % by weight, preferably 9 to 17 % by weight, more preferably 9 to 16 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When the content is less than the ranges, cracks may occur in an automotive interior part manufactured using the thermoplastic resin composition including the components. When the content is greater than the ranges, an automotive interior part manufactured using the thermoplastic resin composition including the components may exhibit reduced rigidity and heat resistance.

The method of manufacturing the polyethylene terephthalate resin is not particularly limited if it is a polymerization method commonly practiced in the technical field to which the present disclosure belongs, and the polyethylene terephthalate resin may be a commercially available product if it meets the definition of the polyethylene terephthalate resin according to the present disclosure.

ii) The polyethylene terephthalate resin may include a recycled polyethylene terephthalate resin.

For example, ii) the polyethylene terephthalate resin may include a water bottle-recycled resin. The water bottle-recycled resin is not limited to the polyethylene terephthalate resin and may be a resin including polyethylene terephthalate, particularly polyethylene terephthalate manufactured through condensation polymerization of terephthalic acid and ethylene glycol.

The water bottle-recycled resin may be molded by extruding a waste water bottle, followed by pelletizing.

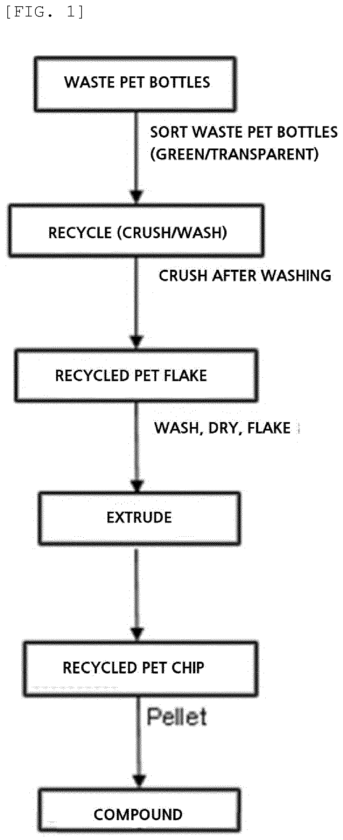

The water bottle-recycled resin may be obtained by, for example, flake-processing PET bottles according to the process flowchart of FIG. 1 described below.

The accompanying FIG. 1 is a process flowchart illustrating a process of producing a recycled polyethylene terephthalate resin by extruding waste water bottles as described in Examples.

As shown in the accompanying FIG. 1, a sorting process is performed to classify waste water bottles into colored bottles and colorless and transparent bottles. The sorting may be done visually, where the color may be predominantly green.

The selected waste water bottles are crushed using a cutter. In performing drying and flake processes, it is preferable to wash the bottles of around 200 kg prior to the crushing process.

The crushing size may be finely divided into, for example, a range of 3 to 5 mm, specifically 3.5 to 5 mm. In this case, the efficiency of a subsequent drying process may be increased by increasing the surface area of a crushed product so that a mixing efficiency with a thickener may also be improved.

The crushed product is secondarily dried, and then flaked.

The secondary drying is a process of removing moisture from the crushed product and mixing a thickener, and may be carried out in a manner of dehumidifying after preliminary drying as needed.

The preliminary drying is a process of heating within a range of 120 to 140°C so that the moisture content of the crushed product reaches around 1000 ppm and a thickener is mixed during the preliminary drying or sequentially after the preliminary drying.

Specifically, the crushed product and the thickener are put into a friction dryer controlled to 140 °C and 50 rpm, and heated air of 120 to 140 °C is continuously passed for about 2 hours, so that the moisture content of the crushed product reaches 1000 ppm.

In this specification, ppm is based on a weight unless otherwise specified.

The thickener is not limited so long as it is a compound that undergoes a thickening reaction without melting around the above-described temperature conditions (e.g., 140 °C) and a dryer temperature condition (e.g., 165 °C) described below. The thickener may be, for example a carbodiimide-based thickener.

Examples of the carbodiimide-based thickener include carbodiimide, polycarbodiimide, and the like. The thickener is added after appropriately adjusting a mixing ratio with the crushed product according to an intrinsic viscosity suitable for a target product. The thickener may be added in an amount of, for example, 0.75 % by weight or less, or 0.25 to 0.75 % by weight, based on 100 % by weight of a total of a mixture of the crushed product and the thickener.

The dehumidifying is a process of obtaining an additional dried material by dehumidifying a moisture content to less than 50 ppm so as to prevent hydrolysis of the resin in the above-described a (preliminary) dried material.

By the dehumidifying, for example, the additional drying material is put into a dryer hopper in the form of high-temperature hot air and stayed for about 5 hours at a temperature of 165 °C and a dew point of -60 to -40 °C so that the moisture content can reach less than 50 rpm.

In the flake processing, flakes are made into around 5mm using an optical flake sorter.

Next, the flakes may be molded into pellets by extruding at an extrusion temperature of 200 to 270 °C.

Specifically, in the extrusion process, a thickener is additionally mixed with the flakes, and a melt melted at a melting temperature of the thickener is molded into pellets.

The thickener has a lower melting temperature than the thickener used in the above-described preliminary dried product and melts at around the drying temperature of 140 °C and the secondary drying temperature of 165 °C described above, thereby being melted when added together with the above-described thickener. Accordingly, preliminary drying and dehumidifying cannot be carried out. Therefore, the thickener is added separately.

A recycled polyethylene terephthalate resin having an intrinsic viscosity required for a target product may be provided by appropriately adjusting the use amount of the thickener. For example, the amount of the thickener may be, for example, 0.1 to 0.75 % by weight based on a total weight of the above-described melt.

As the thickener, an oxazoline-based thickener may be used. For example, oxazoline, 1,3-phenylene bisoxazoline, or the like may be used.

The extrusion process may be performed by, for example, adding the flakes and the thickener to an extruder and melt-extruding at a melting temperature of 275 to 280 °C and a maximum melting pressure of about 110 bar.

The obtained molten extrudate, for example, may be subjected to a subsequent process of being passed through a 20-micron Steel Use Stainless (SUS) filter under a vacuum of 10 mbar to remove foreign substances, followed by cooling and cutting.

The vacuuming and the cooling and cutting of the SUS filter may be performed using a commonly used device.

For example, the molten extrudate discharged from the SUS filter using a pelletizer may be molded into a sphere with a diameter of 2.8 mm using circulating water of 90 °C under conditions of a die plate temperature of 320 °C and a blade rotation speed of 3200 rpm.

When the obtained molded product has residual heat of 140 °C or more, the surface of the molded product may be recrystallized and, for example, surface recrystallization may occur while passing through an in-line crystallizer equipped with a vibrating conveyor in about 15 minutes.

The surface crystallization can prevent raw materials from sticking together and agglomeration.

A surface-crystallized molded product may be processed into a recycled polyethylene terephthalate resin by compounding with talc, a coupling agent, glass fiber, etc. as needed.

The recycled polyethylene terephthalate resin may be included in an amount of 8 to 17 % by weight, preferably 9 to 17 % by weight, more preferably 9 to 16 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. By adjusting the content of the recycled PET resin within the ranges, the mechanical properties of the polyester-based composition may be improved and a thermoplastic resin composition with excellent balance with injection properties may be obtained.

### (Hydrolysis stabilizer)

According to an example of the present disclosure, a combination of iii) a (meth)acrylate compound-conjugated diene compound-aromatic vinyl compound copolymer and iv) a carboxy reactive epoxy resin allows to use as a hydrolysis stabilizer realizing hydrolysis stability.

In the present disclosure, the content (wt%) of a unit in a polymer, a monomer, or a block may mean the content (wt%) of a derived monomer.

In the present disclosure, the content (wt%) of a unit in a polymer, a monomer, or a block may be measured using measurement methods commonly used in the art to which the present disclosure pertains, or the content of added monomers may be defined as the content of units in a prepared polymer under the premise that all monomers are polymerized.

### iii) (Meth)acrylate compound-conjugated diene compound-aromatic vinyl compound copolymer

iii) The (meth)acrylate compound-conjugated diene compound-aromatic vinyl compound copolymer of the present disclosure may complement the heat resistance characteristics, and an automotive interior part made of a thermoplastic resin composition including the (meth)acrylate compound-conjugated diene compound-aromatic vinyl compound copolymer may have excellent impact resistance.

iii) The (meth)acrylate compound-conjugated diene compound-aromatic vinyl compound copolymer may be a graft copolymer.

The graft copolymer may include, for example, 40 to 80 % by weight of a conjugated diene compound, 10 to 40 % by weight of an aromatic vinyl compound and 1 to 20 % by weight of a (meth)acrylate compound.

The graft copolymer may include specifically 50 to 70 % by weight of a conjugated diene compound, 20 to 35 % by weight of an aromatic vinyl compound and 1 to 15 % by weight of a (meth)acrylate compound.

The graft copolymer may include preferably 55 to 65 % by weight of a conjugated diene compound, 25 to 35 % by weight of an aromatic vinyl compound and 5 to 15 % by weight of a (meth)acrylate compound.

When the content of the conjugated diene compound is too small outside the above range, impact resistance may be decreased. On the other hand, when the content of the conjugated diene compound is too high, rigidity (modulus of elasticity) may be decreased.

In addition, when the content of the (meth)acrylate compound is too small outside the above range, rigidity may be improved, but impact resistance may be decreased. On the other hand, when the content of the (meth)acrylate compound is high, the effect of supplementing rigidity may be decreased.

A (meth)acrylate compound included in iii) the (meth)acrylate compound-conjugated diene compound-aromatic vinyl compound copolymer may be a (meth)acrylate compound generally used in the technical field to which the present disclosure belongs and may be, for example, one or more selected from among methacrylate and acrylate, preferably methacrylate.

A conjugated diene compound included in iii) the (meth)acrylate compound-conjugated diene compound-aromatic vinyl compound copolymer may include, for example, butadiene, but is not limited as including only a specific conjugated diene compound

The aromatic vinyl compound included in iii) the (meth)acrylate compound-conjugated diene compound-aromatic vinyl compound copolymer may be one or more selected from among, for example, styrene, α-methylstyrene, α-ethylstyrene and p-methylstyrene and may be preferably styrene.

iii) The (meth)acrylate compound-conjugated diene compound-aromatic vinyl compound copolymer is characterized by prepared by polymerizing components in the above-described specific content ranges and includes preferably a (meth)acrylate component in an appropriate content. As needed, an alkyl acrylate component other than the (meth)acrylate component may be further included.

iii) The (meth)acrylate compound-conjugated diene compound-aromatic vinyl compound copolymer may be used in the form of a powder having a particle size of 0.2 to 0.4*µ*m, preferably 0.25 to 0.35*µ*m, more preferably 0.2 to 0.35*µ*m. In this case, impact strength and injection moldability may be improved.

In this specification, a particle size may be measured according to a known method of measuring the size of particles. Specifically, the average particle diameter of the metal pigment may be measured using BET analysis equipment (Surface Area and Porosity Analyzer ASAP 2020, Micromeritics Co.) according to a nitrogen gas adsorption method.

iii) The (meth)acrylate compound-conjugated diene compound-aromatic vinyl compound copolymer may have a weight average molecular weight of for example 10,000 to 180,000 g/mol, 20,000 g/mol to 150,000 g/mol, 30,000 g/mol to 120,000 g/mol, 50,000 g/mol to 120,000 g/mol, or 80,000 g/mol to 120,000 g/mol. Within these ranges, mechanical properties may be improved.

The content of iii) the (meth) acrylate compound-conjugated diene compound-aromatic vinyl compound copolymer may be 12 to 20 % by weight, preferably 12 to 19 % by weight, more preferably 12 to 18 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When less than these ranges, an automotive interior part manufactured using a thermoplastic resin composition including iii) the (meth)acrylate compound-conjugated diene compound-aromatic vinyl compound may have reduced impact properties. When greater than the ranges, a thermoplastic resin composition including iii) the (meth)acrylate compound-conjugated diene compound-aromatic vinyl compound copolymer may exhibit poor fluidity and the rigidity and heat resistance of an automotive interior part manufactured using the thermoplastic resin composition may be deteriorated.

### iv) Carboxy reactive epoxy resin

iv) The carboxy reactive epoxy resin according to an embodiment of the present disclosure may impart impact resistance to an automotive interior part manufactured using the thermoplastic resin composition of the present disclosure and may improve chemical resistance thereof.

iv) The carboxy reactive epoxy resin may be, for example, an epoxy-functional (meth)acrylic copolymer generated from an epoxy-functional (meth)acrylic monomer and an alkylene.

Unless otherwise specified in this specification, "(meth)acrylic" includes both acrylic and methacrylic monomers, and "(meth)acrylate" includes both acrylate and methacrylate monomers.

Specific examples of the epoxy-functional (meth)acrylic monomer may include compounds containing a 1,2-epoxy group such as glycidyl acrylate and glycidyl methacrylate.

iv) The carboxy reactive epoxy resin may be one or more selected from among, specifically, an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer and an ethylene-vinyl acetate-glycidyl methacrylate copolymer.

iv) The carboxy reactive epoxy resin may be a copolymer formed by polymerizing, for example, 1 to 15 % by weight or 3 to 10 % by weight of a glycidyl methacrylate monomer, 60 to 74 % by weight or 63 to 74 % by weight of an ethylene monomer, and 20 to 30 % by weight or 25 to 30 % by weight of an n-butyl acrylate. Here, when the content of the glycidyl methacrylate monomer is too high, an automotive interior part manufactured using a thermoplastic resin composition containing the glycidyl methacrylate monomer may exhibit insufficient impact resistance and chemical resistance.

The content of iv) the carboxy reactive epoxy resin may be 0.1 to 2.2 % by weight, preferably 0.5 to 2.2 % by weight, more preferably 1 to 2.2 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When the content of the carboxy reactive epoxy resin is too high outside the ranges, gas may be generated from the surface of an automotive interior part injection-molded using a thermoplastic resin composition containing the carboxy reactive epoxy resin, which deteriorates the appearance quality thereof.

A total content of iii) the (meth)acrylate compound-conjugated diene compound-aromatic vinyl compound copolymer and iv) the carboxy reactive epoxy resin may be 15.1 to 20 % by weight, preferably 15.2 to 19 % by weight, more preferably 15.3 to 18 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When used in an excess amount outside the ranges, appearance quality of an automotive interior part injection-molded using a thermoplastic resin composition containing the copolymers may be decreased. On the other hand, when used in an inappropriately too small amount, impact resistance may not be provided, and it is difficult to provide transesterification inhibitory effect.

### v) Glass fiber

The thermoplastic resin composition according to an embodiment of the present disclosure includes v) glass fiber, thereby being capable of improving the physical properties of the thermoplastic resin composition. Accordingly, the tensile strength and flexural strength of a molded product made of the thermoplastic resin composition may be improved.

v) The glass fiber may be any fiber capable of improving mechanical properties by reinforcing the rigidity of a molded product manufactured using the thermoplastic resin composition.

v) The glass fiber may include, for example, 50 to 65 % by weight of silica, 15 to 32 % by weight of alumina and 12 to 22 % by weight of calcium oxide. When glass fiber including the components within these ranges is used, a thermoplastic resin composition in which the balance among chemical resistance, mechanical properties and heat resistance is excellent may be obtained.

v) The glass fiber includes more preferably 50 to 60 % by weight or 50 to 55 % by weight of silica, 15 to 27 % by weight or 15 to 22 % by weight of alumina, and 13 to 25 % by weight or 13 to 20 % by weight of calcium oxide. In this case, a thermoplastic resin composition excellent in the balance of physical properties such as processability, specific gravity and mechanical properties may be obtained, and a molded product with high heat resistance, high rigidity and high toughness may be provided using the thermoplastic resin composition.

v) The glass fiber may be a glass fiber with a circular cross-section or a flat cross-section. When having the cross-section shape within the above ranges, high rigidity, light weight and appearance quality may be obtained.

For example, the glass fiber may have an aspect ratio of 1:1 to 1:4, as a specific example, 1:1 to 1:3, more specifically 1:1 to 1:2. Here, the aspect ratio is expressed as the ratio (L/D) of average length (L) to average diameter (D). Within this range, the thermoplastic resin composition of the present disclosure may have high rigidity and toughness, and the elongation and surface appearance thereof may be improved. As a specific example, the glass fiber may have an aspect ratio of 1:3 to 1:4, more specifically about 1:4. Within this range, in addition to high rigidity and toughness, a molded product advantageous in terms of flatness, deformation, and orientation may be provided.

In the present disclosure, an average diameter and an average length may be measured using a scanning electron microscope (SEM). Specifically, 20 inorganic fillers are selected using a scanning electron microscope, the diameter and length of each inorganic filler are measured using an icon bar capable of measuring diameter, and then the average diameter and average length are respectively calculated.

The average diameter may be, for example, 10 to 13 *µ*m, specifically 10 to 11 *µ*m, and the average length may be, for example, 2.5 to 6 mm, specifically, 3 to 4 mm. When satisfying the ranges, processability may be improved so that a molded product manufactured by molding the thermoplastic resin composition of the present disclosure may have improved tensile strength.

In an example of the present disclosure, v) the glass fiber may be used in combination with other inorganic fibers, and the inorganic fibers may be one or more selected from natural fibers including carbon fibers, basalt fibers, kennel and hemp.

During fiber manufacturing or post-processing, v) the glass fiber may be treated with a sizing agent, such as a lubricant, a coupling agent, and a surfactant.

The lubricant is mainly used to form glass fiber having a good strand, and the coupling agent plays a role in enabling good adhesion between glass fiber and a base resin. When the types of base resin and glass fiber are properly selected, excellent physical properties may be imparted to the thermoplastic resin composition.

The coupling agent may be applied directly to glass fiber or added to an organic matrix. To sufficiently exhibit the performance of the coupling agent, the content thereof may be appropriately selected.

Examples of the coupling agent include amine-based coupling agents, acrylic coupling agents, and silane-based coupling agents, preferably silane-based coupling agents.

The silane-based coupling agent may be, for example, γ-aminopropyl triethoxysilane, γ-aminopropyl trimethoxysilane, N-(beta-aminoethyl) γ-aminopropyl triethoxysilane, γ-methacryloxypropyl triethoxysilane, γ-glycidoxypropyl trimethoxysilane, and β-(3,4-epoxyethyl) γ-aminopropyl trimethoxysilane.

v) The glass fiber may be included in a content of, for example, 10 to 35 % by weight, preferably 10 to 32 % by weight, more preferably 10 to 28 % by weight, still more preferably 15 to 25 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When less than these ranges, cracks may occur in an automotive interior part manufactured using the thermoplastic resin composition including the components. On the other hand, when the content is greater than the ranges, an automotive interior part manufactured using the thermoplastic resin composition including the components may exhibit reduced rigidity and heat resistance.

### Additive

The thermoplastic resin composition according to an embodiment of the present disclosure may further include vi) an appropriate additive to improve flowability thereof.

vi) The additive may be one or more selected from among, for example, a lubricant, a heat stabilizer and a hydrolysis-inhibiting auxiliary.

The lubricant may be any lubricant without particular limitation as long as the lubricant may secure flowability and the ease of ejection of an injection screw used to manufacture an automotive interior part using a thermoplastic resin composition including the lubricant

The lubricant may be, for example, a polyethylene-based wax.

The lubricant may be included in a content of, for example, 0.01 to 5 % by weight, preferably 0.1 to 3 % by weight, more preferably 0.1 to 2 % by weight, still more preferably 0.1 to 1 % by weight, the most preferably 0.1 to 0.5 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When the content of the lubricant is too high outside the ranges, appearance problems such as stains may occur on the surface of an automotive interior part manufactured using a thermoplastic resin composition containing the lubricant, which may impair appearance quality.

The heat stabilizer is not particularly limited as long as it can prevent deterioration due to high temperature of an automotive interior part manufactured using a thermoplastic resin composition containing the stabilizer.

The heat stabilizer is not particularly limited as long as the properties can be secured, but preferably a phenolic antioxidant (high phenolic antioxidant) may be used.

The phenolic antioxidant may include a hindered phenolic stabilizer having a crystallization temperature (Tm) of 110 to 130°C and may include specifically tetrakis[ethylene-3-(3,5-di-t-butyl-hydroxy phenyl) propionate], octadecyl 3-(3,5-di-t-butyl-4-hydroxyphenyl) propionate or a combination thereof.

The content of the heat stabilizer may be, for example, 0.01 to 5 % by weight, preferably 0.01 to 3 % by weight, more preferably 0.01 to 2 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When the content of the heat stabilizer is too large, appearance problems such as stains may occur on the surface of an automotive interior part manufactured using a thermoplastic resin composition containing the heat stabilizer, which may impair appearance quality.

As the hydrolysis-inhibiting auxiliary according to the present disclosure, a variety of known types may be used as long as it does not adversely affect the thermoplastic resin composition of the present disclosure. Among commercially available materials, inorganic phosphate compounds such as sodium phosphate monobasic of the formula NaH₂PO₄ may be used.

The content of the hydrolysis-inhibiting auxiliary may be, for example, 0.01 to 5 % by weight, preferably 0.01 to 3 % by weight, more preferably 0.01 to 2 % by weight, based on 100 % by weight of a total of the components, i.e., (i) a polybutylene terephthalate resin, ii) a polyethylene terephthalate resin, iii) a (meth)acrylate compound-conjugated diene compound-aromatic vinyl compound copolymer, iv) a carboxy reactive epoxy resin, v) glass fiber and vi) an additive to be described below, constituting the composition. When the content of the hydrolysis-inhibiting auxiliary is too high outside the ranges, appearance problems such as stains may occur on the surface of an automotive interior part manufactured using a thermoplastic resin composition including the hydrolysis-inhibiting auxiliary, which may impair appearance quality.

The thermoplastic resin composition may have a high-load heat deflection temperature of 180 °C or more, specifically 184 to 190 °C, measured according to ISO 75 by manufacturing a specimen described below.

In this disclosure, the high-load heat deflection temperature may be measured under a high load of 1.82 MPa according to ISO 75.

### Method of preparing thermoplastic resin composition

Hereinafter, a method of preparing the thermoplastic resin composition of the present disclosure is described. In describing the method of preparing the thermoplastic resin composition of the present disclosure, all the above-described contents of the thermoplastic resin composition are included.

The method of preparing the thermoplastic resin composition of the present disclosure includes a step of feeding, for example, i) 44 to 56 % by weight of a polybutylene terephthalate resin; ii) 8 to 17 % by weight of a polyethylene terephthalate resin; iii) 12 to 20 % by weight of a (meth)acrylate compound-conjugated diene compound-aromatic vinyl compound copolymer; iv) 0.1 to 2.2 % by weight of a carboxy reactive epoxy resin; and v) 10 to 35 % by weight of glass fiber containing SiO₂, CaO and Al₂O₃ into an extruder and melt-kneading and extruding the same, wherein a content of SiO₂ is 50 % by weight and a content of Al₂O₃ is greater than a content of CaO.

The melt-kneading step may include, for example, other additives described above.

For example, the melt-kneading and extrusion step may be performed using one or more selected from a group consisting of a single-screw extruder, a twin-screw extruder, and a Banbury mixer. Preferably, the melt-kneading and extrusion step may be performed by uniformly mixing the composition using a twin-screw extruder and performing extrusion to obtain a thermoplastic resin composition in pellet form. In this case, mechanical properties, thermal properties, plating adhesion, and appearance may be excellent.

The step of manufacturing pellets using an extrusion kneader may be carried out, for example, under conditions of an extrusion temperature of 250 to 300 °C, a flow ratio (F/R) of 10 to 59 kg/hr and a screw rotation rate of 200 to 390 rpm, preferably under conditions of an extrusion temperature of 250 to 280 °C, F/R of 10 to 40 kg/hr and a screw rotation rate of 220 to 300 rpm.

After extruding the thermoplastic resin composition, a step of injection-molding at an injection-molding temperature of 240 to 280 °C, specifically 250 to 270 °C, a mold temperature of 40 to 80°C, specifically 50 to 70 °C, and an injection-molding rate of 10 to 50 mm/sec, specifically 10 to 30 mm/sec, may be included.

Further, an automotive interior part including the thermoplastic resin composition of the present disclosure is described. In describing an automotive interior part including the thermoplastic resin composition of the present disclosure, all the above-described contents of the thermoplastic resin composition are included.

### Automotive interior part

The components of the thermoplastic resin composition of the present disclosure have been sufficiently complemented, so the thermoplastic resin composition can be usefully used in manufacturing an automotive interior part requiring moldability, mechanical properties and heat and chemical resistance under high load.

The method of manufacturing the automotive interior part may be a method commonly used in the art. For example, a molding method such as an injection molding method, an injection compression molding method, an extrusion molding method (sheet casting), a press molding method, a pressure molding method, a thermal bending method, a compression molding method, a calender molding method or a rotational molding method may be applied using a melt-kneaded product or pellets of the thermoplastic resin composition according to the present disclosure or a sheet (plate) molded therefrom as a raw material.

Pellets may be manufactured by feeding the thermoplastic resin composition of the present disclosure including i) a polybutylene terephthalate resin, ii) a polyethylene terephthalate resin, iii) a (meth)acrylate compound-conjugated diene compound-aromatic vinyl compound copolymer, iv) a carboxy reactive epoxy resin and v) glass fiber into a main inlet at 200 to 390 rpm or 250 to 280 rpm and at a flow ratio (F/R) of 10 to 59 kg/hr or 30 to 40 kg/hr using a twin-screw extruder (ϕ40, L/D: 42, SM Platek equipment) set to 250 to 300 °C or 250 to 280 °C and by feeding vi) an additive into a side inlet at a flow ratio of 10 to 59 kg/hr or 10 to 20 kg/hr, followed by melt-kneading and extruding the same.

The pellets may be fed into an injection-molding machine to manufacture an automotive interior part.

To indirectly check the physical properties of the manufactured automotive interior part, a specimen satisfying the ISO standards was manufactured by injecting the pellets at an injection-molding temperature of 260 °C, a mold temperature of 60 °C, and an injection-molding speed of 30 mm/sec using an injection molding machine (ENGEL, 80 ton).

A melt flow rate of the manufactured specimen measured under a load of 5 kg according to ISO 1133 may be, for example, 30 g/10min or more, specifically 30 to 36 g/10 min.

In addition, an Izod notch impact strength of the specimen measured at 23 °C according to ISO 180/1A may be, for example, 10 kJ/m² or more, specifically 11 to 12 kJ/m².

In addition, a tensile strength of the specimen measured at a rate of 50 mm/min according to ISO 527 may be, for example, 90 MPa or more, specifically 90 to 99 MPa.

In addition, a flexural strength of a 4 mm specimen measured at a rate of 2 mm/min using SPAN 64 according to ISO 178 may be, for example, 140 MPa or more, specifically 140 to 144 MPa, and a flexural modulus thereof may be 5000 MPa or more, specifically 5000 to 5150 MPa.

The automotive interior part may specifically be a vehicle electronics body control module housing, but is not limited to a specific type.

That is, the thermoplastic resin composition according to an embodiment of the present disclosure includes a polybutylene terephthalate resin, a polyethylene terephthalate resin, a (meth)acrylate compound-conjugated diene compound-aromatic vinyl compound copolymer, a carboxy reactive epoxy resin, and glass fiber containing an excess of SiO₂ in a specific weight percent ratio, and an automotive interior part made of the composition exhibits improved heat resistance and impact resistance due to a materials different from existing materials. Accordingly, the physical property balance between mechanical properties and fluidity can be satisfied, excellent product reliability can be provided, and appearance quality can be improved.

In describing the thermoplastic resin composition of the present disclosure, the method of preparing the thermoplastic resin composition, and an automotive interior part made of the thermoplastic resin composition, other conditions or equipment not explicitly described may be appropriately selected within a range commonly practiced in the art, and it is specified that it is not particularly limited.

Hereinafter, examples of the present disclosure are described in detail so that those skilled in the art can easily practice the present disclosure. However, the present disclosure may be embodied in many different forms and is not limited to the embodiments described herein.

### [Examples]

### Examples 1 to 4, and Comparative Examples 1 to 9

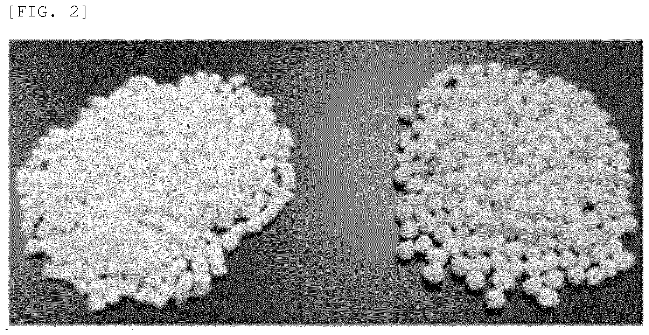

Raw materials used in Examples were as follows.
(A) Polybutylene terephthalate resin (PBT)
A-1) PBT, intrinsic viscosity (IV) 0.7 dl/g
A-2) PBT, intrinsic viscosity (IV) 0.8 dl/g
(B) Polyethylene terephthalate resin (PET: homopolymer), recycled PET resin having an intrinsic viscosity (IV) of 0.8 dl/g: Water bottles were processed according to the process flowchart of the accompanying FIG. 1 to produce white chips of FIG. 2 (right drawing
(C) (Meth)acrylate compound-conjugated diene compound-aromatic vinyl compound copolymer
C1) Methacrylate-butadiene-styrene copolymer (particle size 0.3 ***µ*m**, 15 % by weight of methylmethacrylate, 80 % by weight of butadiene, 5 % by weight of styrene, weight average molecular weight: 103,000 g/mol)
C2) Acrylonitrile-styrene-butyl acrylate copolymer (25 % by weight of acrylonitrile, 34 % by weight of styrene, 41 % by weight of butyl acrylate, weight average molecular weight: 130,000 g/mol)
C3) Acrylonitrile-butadiene-styrene copolymer (10 % by weight of acrylonitrile, 60 % by weight of butadiene, 30 % by weight of styrene, weight average molecular weight: 78,000 g/mol)
D) Ethylene/n-butyl acrylate/glycidyl methacrylate resin (65 % by weight of ethylene, 28 % by weight of n-butyl acrylate, 7 % by weight of glycidyl methacrylate)
(E) Glass fiber: Average length 3 mm, average diameter 10 um
E-1) Glass fiber including 48 % by weight of silica, 12 % by weight of alumina, 35 % by weight of calcium oxide, and 5 % by weight of other components including MgO
E-2) Glass fiber including 44 % by weight of silica, 14 % by weight of alumina, 36 % by weight of calcium oxide, and 6 % by weight of other components including MgO
E-3) Glass fiber including 52 % by weight of silica, 18 % by weight of alumina, 16 % by weight of calcium oxide, and 14 % by weight of other components including MgO

### (Additive)

F) Lubricant (polyethylene wax) LDPE wax
G) Hydrolysis-inhibiting auxiliary (transesterification inhibitor): Sodium phosphate monobasic of Formula NaH₂PO₄
H) Heat stabilizer (high phenolic antioxidant): Pentaerythritol tetrakis (3-(3,5-di-tert-butyl-4-hydroxypehnyl)propionate

Raw materials of a thermoplastic resin composition shown in Table 1 below were mixed, and then a thermoplastic resin composition having even dispersion was manufactured in the form of pellets through extrusion, and then the pellets were heated, injected into a mold frame and cooled. Through an injection-molding process of manufacturing components, a specimen that can be used as an automotive interior part was manufactured.

Specifically, the components shown in Table 1 below were mixed by means of a mixer, and then fed into a main inlet at 250 rpm and a flow ratio of 39 kg/hr using a twin-screw extruder (ϕ40, L/D: 42, SM Platek equipment) set to 260 °C. In addition, the components were extruded for 1 to 3 minutes while feeding an additive into a side inlet at a rate of 11 kg/hr, thereby manufacturing a thermoplastic resin composition pellets.

The manufactured pellets were dried in a 80 °C convection oven for four hours or more, and then injection-molded at an injection-molding temperature of 260 °C, a mold temperature of 60 °C, and an injection-molding rate of 30 mm/sec using an injection-molding machine (80 tons, manufactured by ENGEL), thereby manufacturing an ISO specimen.

**[Table 1]**

| Classi fication | Exa mpl e 1 | Exa mpl e 2 | Exa mpl e 3 | Exa mpl e 4 | Comp arat ive | Comp arat ive | Comp arat ive | Comp arat ive | Comp arat ive | Comp arat ive | Comp arat ive | Comp arat ive | Comp arat ive |
|---|---|---|---|---|---|---|---|---|---|---|---|---|---|
| | | | | | Exam ple 1 | Exam ple 2 | Exam ple 3 | Exam ple 4 | Exam ple 5 | Exam ple 6 | Exam ple 7 | Exam ple 8 | Exam ple 9 |
| A-1 | 51. 7 | 46. 7 | 49. 7 | 46. 2 | 61.7 | 41.2 | 49.2 | 49.2 | 51.2 | 51.2 | 51.2 | 56.7 | 39.7 |
| B | 10. 0 | 15. 0 | 10. 0 | 15. 0 | - | 20.0 | 10.0 | 10.0 | 10.0 | 10.0 | 10.0 | 10.0 | 10.0 |
| C-1 | 14. 0 | 14. 0 | 16. 0 | 14. 0 | 14.0 | 14.0 | 16.0 | 16.0 | 16.0 | - | - | 9.0 | 26.0 |
| C-2 | | | | | | | | | | 16.0 | | | |
| C-3 | | | | | | | | | | | 16.0 | | |
| D | 1.5 | 1.5 | 1.5 | 2.0 | 1.5 | 2.0 | 2.0 | 2.0 | - | - | - | 1.5 | 1.5 |
| E-1 | | | | | | | 22.0 | | | | | | |
| E-2 | | | | | | | | 22.0 | | | | | |
| E-3 | 22. 0 | 22. 0 | 22. 0 | 22. 0 | 22.0 | 22.0 | - | - | 22.0 | 22.0 | 22.0 | 22.0 | 22.0 |
| F | 0.3 | 0.3 | 0.3 | 0.3 | 0.3 | 0.3 | 0.3 | 0.3 | 0.3 | 0.3 | 0.3 | 0.3 | 0.3 |
| G | 0.1 | 0.1 | 0.1 | 0.1 | 0.1 | 0.1 | 0.1 | 0.1 | 0.1 | 0.1 | 0.1 | 0.1 | 0.1 |
| H | 0.4 | 0.4 | 0.4 | 0.4 | 0.4 | 0.4 | 0.4 | 0.4 | 0.4 | 0.4 | 0.4 | 0.4 | 0.4 |

For reference, the total % by weight of all the raw materials from A-1 to H used in Table 1 is 100% by weight.

### Experimental Example 1 : Evaluation of physical properties of automotive interior part specimen

The physical properties of the automotive interior part specimens manufactured according to Examples 1 to 4 and Comparative Examples 1 to 9 were evaluated. Evaluation methods were as follows:
- Fluidity (Melt Flow Rate): Evaluated according to ISO 1133 (260 °C, 5 kg)
- Impact strength (IZOD): Evaluated according to ISO 180/1A (Notched, 23 °C)
- Tensile strength and elongation: Evaluated according to ISO 527 (50 mm/min)
- Flexural strength, flexural modulus: Evaluated according to ISO 178 (4 mm, SPAN 64, rate: 2 mm/min)
- Heat deflection temperature (HDT): Evaluated according to ISO 75 (high load of 1.82 MPa)

The results measured with the evaluation criteria are shown in Table 2 below.

**[Table 2]**

| Classi ficati on | Exa mpl e 1 | Exa mpl e 2 | Exa mpl e 3 | Exa mpl e 4 | Comp arat ive Exam ple 1 | Comp arat ive Exam ple 2 | Comp arat ive Exam ple 3 | Comp arat ive Exam ple 4 | Comp arat ive Exam ple 5 | Comp arat ive Exam ple 6 | Comp arat ive Exam ple 7 | Comp arat ive Exam ple 8 | Comp arat ive Exam ple 9 |
|---|---|---|---|---|---|---|---|---|---|---|---|---|---|
| Fluidi ty (g/10m in) | 35 | 36 | 34 | 30 | 2 | 40 | 34 | 34 | 39 | 58 | 44 | 43 | 29 |
| Tensil e streng th (MPa) | 93 | 94 | 90 | 90 | 87 | 95 | 89 | 90 | 82 | 95 | 88 | 97 | 89 |
| Tensil e elonga tion (%) | 3.0 | 3.0 | 3.9 | 4.0 | 4.0 | 3.0 | 3.5 | 3.0 | 3.0 | 4.9 | 3.9 | 2.2 | 5.2 |
| Flexur al streng th (MPa) | 141 | 143 | 142 | 140 | 137 | 143 | 139 | 135 | 126 | 140 | 137 | 147 | 138 |
| Flexur al modulu s (MPa) | 507 5 | 510 0 | 500 0 | 508 7 | 4710 | 5100 | 4725 | 4925 | 4695 | 5102 | 5010 | 5210 | 4820 |
| Impact streng th ( kJ/m² ) | 11. 4 | 11. 0 | 11. 7 | 11. 8 | 11.4 | 10.2 | 8.4 | 9.5 | 11.7 | 9.5 | 11.4 | 9.2 | 16.2 |
| Heat deflec tion temper ature (°C) | 185 | 186 | 184 | 184 | 183 | 181 | 177 | 180 | 140 | 158 | 160 | 188 | 178 |

Referring to Table 2, it can be confirmed that the thermoplastic resin compositions of Examples 1 to 4 according to the present disclosure have high impact strength, high flexural modulus, a high heat deflection temperature under high load, and a high hydrolysis resistance retention rate so that automotive interior parts made of the thermoplastic resin compositions basically satisfy physical properties such as impact strength, tensile strength, and flexural strength, have excellent chemical resistance and high-load heat resistance, lower gas generation during injection-molding, and provide product reliability and appearance quality. In addition, it was confirmed that, in the case of Comparative Example 1 in which the polybutylene terephthalate resin is used in an excessive amount outside an appropriate range, processability is poor due to a low melt flow rate, and tensile strength, flexural strength and flexural modulus are significantly reduced, compared to Examples 1 to 4.

In addition, it was confirmed that in the case of Comparative Example 2 in which the polybutylene terephthalate resin is used in a very small amount, impact strength and heat deflection temperature are somewhat poor, compared to Examples 1 to 4.

In addition, it can be confirmed that in the case of Comparative Example 3 or 4 in which glass fiber containing SiO₂ in a content of 50 % by weight was used, tensile strength, flexural strength, flexural modulus, impact strength, heat deflection temperature, and the like are poor, compared to Examples 1 to 4.

In addition, it can be confirmed that in the case of Comparative Example 5 in which a carboxy reactive epoxy resin was not used, tensile strength, flexural strength, flexural modulus and heat resistance are poor, compared to Examples 1 to 4.

In addition, it can be confirmed that in the case of Comparative Example 6 in which an ASA resin was used instead of a (meth)acrylate compound-conjugated diene compound-aromatic vinyl compound, impact strength and heat resistance are decreased, compared to Examples 1 to 4.

In addition, it can be confirmed that in the case of Comparative Example 7 in which an ABS resin was used instead of a (meth)acrylate compound-conjugated diene compound-aromatic vinyl compound, tensile strength, flexural strength and heat resistance are decreased, compared to Examples 1 to 4.

In addition, it can be confirmed that in the case of Comparative Example 8 in which a (meth)acrylate compound-conjugated diene compound-aromatic vinyl compound was used in an amount smaller than an appropriate amount, impact strength is decreased, compared to Examples 1 to 4.

In addition, it was confirmed that in the case of Comparative Example 9 in which a (meth)acrylate compound-conjugated diene compound-aromatic vinyl compound was used in an amount smaller than an appropriate amount, fluidity and flexural modulus are decreased and tensile strength, flexural strength and heat resistance are poor, compared to Examples 1 to 4.

Additionally, a specimen was obtained by repeating the same process as in Example 1 except that virgin PET was used instead of the recycled PET resin of Example 1, and the fluidity, tensile strength, tensile elongation, flexural strength, a flexural modulus, impact strength, heat deflection temperature of the specimen were measured in the same manners as described above. Here, white chips shown in a left drawing of the accompanying FIG. 2 were used as virgin PET.

As a result, the fluidity was 34 g/10 min, the tensile strength was 99 MPa, the tensile elongation was 3.9%, the flexural strength was 144 MPa, the flexural modulus was 5070 MPa, the impact strength was 11.4 kJ/m², and the heat deflection temperature was 185 °C. These results indicate that the specimen has equivalent or similar physical property values to those of the thermoplastic resin compositions of Examples 1 to 4.

That is, the thermoplastic resin composition according to an embodiment of the present disclosure includes a polybutylene terephthalate resin, a polyethylene terephthalate resin, a (meth)acrylate compound-conjugated diene compound-aromatic vinyl compound copolymer, a hydrolysis stabilizer mixed with a carboxy reactive epoxy resin, and glass fiber containing an excess of SiO₂ in a specific weight percent ratio, so that an automotive interior part made of the composition has improved heat resistance and impact resistance and, accordingly, satisfies the physical property balance between mechanical properties and fluidity and provides excellent product reliability and appearance quality. In particular, the physical property values were sufficiently improved even when applying a recycled polyethylene terephthalate resin as a polyethylene terephthalate resin.

## Claims

1. A thermoplastic resin composition, comprising:
i) 44 to 56 % by weight of a polybutylene terephthalate resin;
ii) 8 to 17 % by weight of a polyethylene terephthalate resin;
iii) 12 to 20 % by weight of a (meth)acrylate compound-conjugated diene compound-aromatic vinyl compound copolymer;
iv) 0.1 to 2.2 % by weight of a carboxy reactive epoxy resin; and
v) 10 to 35 % by weight of glass fiber comprising SiO₂, CaO and Al₂O₃,
wherein a content of SiO₂ is 50 % by weight or more, and a content of Al₂O₃ is greater than a content of CaO.

2. The thermoplastic resin composition according to claim 1, wherein i) the polybutylene terephthalate resin has an intrinsic viscosity of 0.45 to 0.85 dl/g, and ii) the polyethylene terephthalate resin has an intrinsic viscosity of 0.5 to 0.9 dl/g.

3. The thermoplastic resin composition according to claim 1, wherein ii) the polyethylene terephthalate resin is a recycled polyethylene terephthalate resin.

4. The thermoplastic resin composition according to claim 1, wherein iii) the (meth)acrylate compound-conjugated diene compound-aromatic vinyl compound copolymer comprises a graft copolymer comprising 40 to 80 % by weight of a conjugated diene compound, 10 to 40 % by weight of an aromatic vinyl compound and 1 to 20 % by weight of a (meth)acrylate compound.

5. The thermoplastic resin composition according to claim 1, wherein iv) the carboxy reactive epoxy resin is one or more selected from among an ethylene-n-butyl acrylate-glycidyl methacrylate copolymer, an ethylene-glycidyl methacrylate copolymer, an ethylene-acrylic ester-glycidyl methacrylate copolymer, an ethylene-methyl acrylate-glycidyl methacrylate copolymer, an ethylene-dimethacrylate-glycidyl methacrylate copolymer, an ethylene-acrylate-glycidyl methacrylate copolymer and an ethylene-vinyl acetate-glycidyl methacrylate copolymer.

6. The thermoplastic resin composition according to claim 1, wherein iv) the carboxy reactive epoxy resin comprises 1 to 15 % by weight of a monomer derived from glycidyl methacrylate.

7. The thermoplastic resin composition according to claim 1, wherein an intrinsic viscosity of i) the polybutylene terephthalate resin is smaller than an intrinsic viscosity of ii) the polyethylene terephthalate resin.

8. The thermoplastic resin composition according to claim 1, wherein ii) the polyethylene terephthalate resin comprises a water bottle-recycled resin.

9. The thermoplastic resin composition according to claim 1, wherein the thermoplastic resin comprises one or more additive selected from among a polyethylene-based lubricant, a hydrolysis-inhibiting auxiliary and a phenolic antioxidant.

10. The thermoplastic resin composition according to claim 1, wherein the thermoplastic resin composition has a flexural strength of 140 MPa or more and a flexural modulus of 5000 MPa or more, wherein the flexural strength and the flexural modulus are measured at a rate of 2 mm/min using a 4 mm specimen and SPAN 64 according to ISO 178.

11. A method of preparing a thermoplastic resin composition, the method comprising:
feeding the thermoplastic resin composition into an extruder and melt-kneading and extruding the thermoplastic resin composition,
wherein the thermoplastic resin composition comprises:
i) 44 to 56 % by weight of a polybutylene terephthalate resin;
ii) 8 to 17 % by weight of a polyethylene terephthalate resin;
iii) 12 to 20 % by weight of a (meth)acrylate compound-conjugated diene compound-aromatic vinyl compound copolymer;
iv) 0.1 to 2.2 % by weight of a carboxy reactive epoxy resin; and
v) 10 to 35 % by weight of glass fiber comprising SiO₂, CaO and Al₂O₃,
wherein a content of SiO₂ is 50 % by weight or more, and a content of Al₂O₃ is greater than a content of CaO.

12. The method according to claim 11, wherein an intrinsic viscosity of i) the polybutylene terephthalate resin is smaller than an intrinsic viscosity of ii) the polyethylene terephthalate resin.

13. An automotive interior part manufactured using the thermoplastic resin composition according to claim 1.

14. The automotive interior part according to claim 13, the automotive interior part is a vehicle electronics body control module housing.
